Europäisches Patentamt

**European Patent Office**

**Office européen des brevets**

(19)

(11) Publication number: **0 078 715**
A1

(12)

# EUROPEAN PATENT APPLICATION

(21) Application number: **82305861.5**

(22) Date of filing: **04.11.82**

(51) Int. Cl.³: **C 03 B 5/027,** C 03 B 5/16, C 03 B 5/18

(30) Priority: 04.11.81 US 317995
04.11.81 US 317996
04.11.81 US 317994

(43) Date of publication of application: 11.05.83
Bulletin 83/19

(84) Designated Contracting States: BE DE FR GB IT NL

(71) Applicant: Corning Glass Works, Houghton Park, Corning, New York, 14831 (US)

(72) Inventor: Palmquist, Ronald William, 3228 Livesay Road, Horseheads New York, N.Y. 14845 (US)
Inventor: Carley, Harold James, 10, Orchard Drive, Corning New York, N.Y. 14830 (US)

(74) Representative: Boon, Graham Anthony et al, Elkington and Fife High Holborn House 52/54 High Holborn, London, WC1V 6SH (GB)

(54) **Glass-melting furnaces.**

(57) In a glass-melting furnace (10), electrodes (30, 130, 130') and other devices may be protected from degradation by oxygen above an oxidation temperature thereof by immersion into the glass (12, 112). In such a glass-melting furnace (10), electrodes (30, 130, 130') are inserted through the batch (20, 120) in symmetrical locations spaced from sidewalls (14, 114) of the furnace (10). Melting and refining takes place in relatively narrow bands below the batch (20, 120).

EP 0 078 715 A1

ACTORUM AG

## GLASS-MELTING FURNACES

This invention relates to glass-melting furnaces. More particularly, the invention relates to the use of electrodes or other devices inserted at selected locations through the batch of a vertical glass-melting furnace.

In an electric glass-melting furnace, electrodes are coupled to a source of electric power and placed in contact with a bath of molten glass. Electrical energy flows between the electrodes and dissipates energy in the form of Joule heating in the molten glass for melting a blanket of glass-forming batch materials deposited on and floating on top of the bath. Such electrodes may be inserted through openings in wall portions of the furnace, as in conventional furnaces, or may be directly placed in contact with the molten glass from above or through the layer of batch floating thereon, as in the case of a cold crown electric melter.

A significant characteristic of a cold crown vertical furnace is its relatively great depth, e.g. 10 to 15 ft (3 to 4.5m). This depth is required in order to produce a specific convection pattern. An exemplary convection pattern comprises rapidly moving glass in the upper 2/3 of the furnace, sometimes hereinafter referred to as the active zone, and slower moving glass in the lower 1/3 of the furnace, sometimes hereinafter referred to as the quiescent zone. Such an arrangement gives the furnace the ability to produce quality glass at high melting rates. The present invention allows for the use of a relatively shallow furnace structure.

In conventional vertical furnaces, electrodes are located at the upper part of the walls near the batch blanket. Introduction of the power close to the wall causes the hottest spot in the furnace to be at the wall. As a result, the furnace suffers from high corrosion rates and a short life.

Another problem with conventional vertical furnaces is that the electrodes suffer from high corrosion and short life. The electrodes project horizontally through the furnace sidewall, and may consist of three rods with the lateral surface area orientated perpendicular to the path of electrical current flowing therebetween. Thus, corrosion is concentrated at the tip of the electrode.

In prior art furnaces, the depth of the furnace must be increased as one increases the diameter. This is partly the result of the electrical power being dissipated close to the walls so that the centre of the furnace is much cooler and produces a strong downward convection which in turn reduces the thickness of the quiescent zone.

In general, electrodes positioned through the batch have the advantage of being radially and vertically adjustable within the batch blanket on the top surface of the furnace. This adjustability allows optimization of furnace performance for a particular output.

Batch electrodes are also more easily replaced than electrodes which extend through openings in the furnace sidewall. Consequently, the furnace is more reliable. Also, the batch electrode rod is now vertically placed within the furnace. With electrical current uniformly placed over the side of the rod, the corrosion of the electrode is minimized and electrode life increased.

Batch electrodes can be placed in a wide variety of positions. In general, these positions will coincide with the electrical phases available in such a manner that symmetry of current flow from the electrodes is maintained. Symmetry of electrical placement and firing are important and have been found to affect melting efficiency favourably and enhance furnace life.

In many glass-melting furnaces molybdenum (moly) is used as the preferred electrode material. However, because moly has a relatively low oxidation temperature of about 500 °C, complex protection devices are required to shield the electrodes from deterioration by contact with oxygen trapped in the glass-forming batch materials and/or other corrosive agents therein. Such devices include conventional water-cooled stainless steel sleeves or specially fabricated glass contact refractory sleeves which surround the electrode. These devices are expensive and somewhat short lived. For example, water cooling tends to dissipate energy intended for glass-melting purposes and has a deleterious effect on melting efficiency and glass quality. Protection devices tend to be heavy and cumbersome and are not easily adjusted or replaced, thereby diminishing their versatility. Glass quality may also be affected by contamination of the glass by materials forming the protective devices, and these materials eventually corrode and become mixed with the glass in the furnace.

A preferred embodiment of the aspect of the present invention uses a relatively inexpensive and long-lived system for directly immersing moly rods into a bath of thermoplastic material. The moly rods are protected from oxidation without complicated peripheral apparatus. The system requires no cooling, and thus, energy utilization is enhanced.  Further, the moly rods can be supported in a relatively simple holder thereby facilitating adjustment and replacement.

It should be realized that the present invention is also applicable to other devices which may be directly immersed in a bath of molten glass as, for example, stirring devices, oxygen sensors and thermocouples.  Also other oxidizable materials are contemplated for example tungsten, rhenium and columbium), as long as the oxidizable portions thereof are protected in the manner set forth herein. However, in order to simplify the disclosure herein, reference will mainly be made to the advantages of the present invention relative to moly electrodes. It is intended, however, that such other alternatives are to be considered part of the invention.

A method and apparatus is disclosed herein for operating a glass-melting furnace having sidewall portions and a bottom wall forming a relatively shallow vessel for containing a bath of molten glass, wherein the furnace is electrically fired by at least one group of oxidizable electrodes inserted directly into the bath.  The method includes the steps of placing each group of electrodes at selected locations about the furnace in a symmetrical circumferential pattern about a geometric centre thereof, adjusting each group of placed electrodes to radial locations relative to said centre which locations are relatively uniformly spaced from the centre and at least a selected minimum distance from a sidewall portion of said furnace.  Each electrode in a group is electrically fired in a symmetrical electrical pattern relative to each electrode in the group and each other group of electrodes such that heat energy within the furnace is concentrated away from the sidewall portions of the furnace. The number of electrodes and dimensions of the furnace are chosen such that melting and refining of glass occurs within respective relatively narrow bands below an upper surface of the bath.

A method is also described herein for protecting or shielding devices adapted to be directly inserted within a bath of molten glass. The method includes the steps of dipping the device into the bath of molten glass along a selected axial length thereof to a dipping level, allowing the molten glass to adhere to the device over said selected length and withdrawing the device and adhered molten glass from the bath at least to a selected operating level above the lower immersion level, such that portions of the electrode experiencing temperatures in excess of an oxidation temperature thereof are coated with a layer of highly viscous, partially solidified glass.

IN THE ACCOMPANYING DRAWINGS:

Figure 1 is a schematic side sectional illustration of a preferred embodiment of a glass-melting furnace of the present invention including one exemplary batch electrode;

Figure 2 is a schematic top plan view of a typical electrode layout for the furnace of Figure 1 including a phasor diagram superimposed thereon;

Figure 3 is a plot of furnace height versus melting area for furnaces with and without batch electrodes;

Figure 4 is a fragmented schematic side sectional illustration of an electrode (including a phantom view thereof) immersed in a glass-melting furnace being operated in accordance with the principles of one aspect of the present invention;

Figure 4A is a schematic diagram illustrating an inclined electrode.

Figure 5 is a schematic illustration of an alternative embodiment of an electrode constructed in accordance with the principles of an aspect of the present invention, using a graded glass shielding device; and

Figure 6 shows another embodiment wherein the electrode has an axial opening into which a purge fluid is introduced.

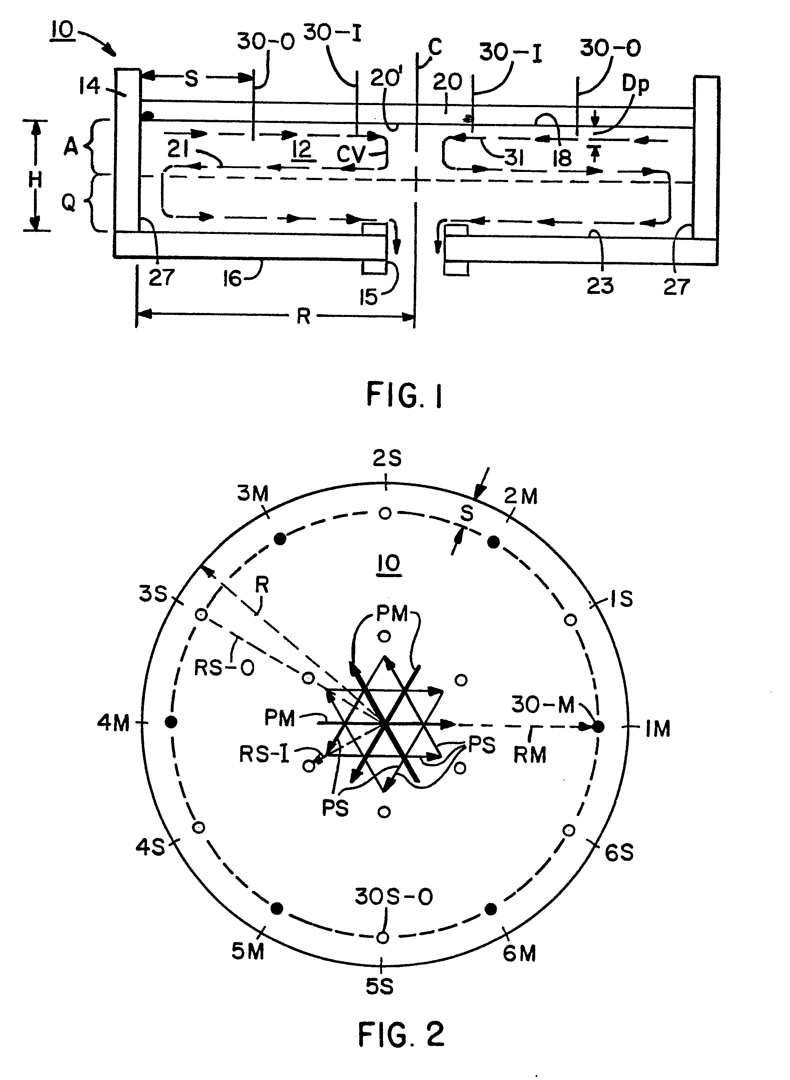

Figure 1 shows a preferred embodiment of a vertical electric glass-melting furnace 10 of the present invention illustrated schematically in side section with cross hatching eliminated for clarity. Preferably the furnace 10 is polygonal or near circular having a geometric centre C and radius R (see Fig. 2). The furnace 10 includes an upstanding sidewall 14 and a bottom wall 16 having an outlet opening 15 at centre C. The furnace 10 contains a bath of molten thermoplastic material such as glass 12. The bath of molten glass 12 has an upper surface 18 upon which there is deposited a quantity of glass-forming batch materials or batch 20. The batch 20 is in the form of a floating blanket which insulates the surface 18 of the bath 12 and retains heat within the furnace 10. The molten glass 12 is initially melted by conventional means including a gas burner (not shown). Thereafter, continuous melting takes place by means of one or more groups of current-carrying electrodes 30 (subscripts sometimes omitted) inserted into the bath 12. Electrodes 30 closest the sidewall 14 are labeled with the designation O for outer and the electrodes 30 closest the centre C are labeled I for inner.

Each electrode 30 many be carried by suitable means (not shown herein but clearly disclosed in U.S. patent application Serial no. 243811 filed 16 March 1981.

The electrodes 30 are free to be moved vertically, radially, circumferentially and angularly. Radial positioning of the electrodes 30 is especially important for maintaining proper heat distribution. The outer electrodes 30-0 are placed no closer to the sidewalls 14 than a selected minimum spacing or distance S. Heat energy produced by outer electrodes 30-0 is removed from sidewalls 14 rendering the same relatively cool in comparison to prior art furnaces.

It is well known that a temperature gradient in a glass melting furnace causes the glass to move in convective rolls. In one embodiment of the present invention it is preferred that the electrodes 30 produce heat directly under the batch blanket 20. The outer electrodes 30-0 are fired with a greater power to produce more heat about the periphery of the furnace 10. The glass 12 in the furnace tends to move radially inwardly of the furnace and downwardly near the centre C which is relatively cooler. The glass 12 moves in a convective roll pattern as hereafter described. The convective roll CV (see arrows) circulates across upper part of the furnace near the upper surface 18 radially inwardly towards centre C, thence downwardly near the centre towards an interface 21 separating upper active zone A from lower quiescent zone Q. The glass 12 meets the boundary 21 and tends to move radially outwardly from centre C to sidewalls 14. Thereafter the glass 12 moves downwardly along sidewalls 14 towards bottom 16 and thence radially inwardly across bottom 16 towards the centre C and to outlet 15.

The convective roll CV shown represents the path taken by freshly melted glass 12 having a minimum residence time in the furnace 10 necessary to produce good quality product. It should be clear that some of the glass 12 recirculates in the furnace 10 and has a longer residence time. Also, other patterns are possible. For example, in a furnace having a refractory metal liner, the outer electrodes 30-0 may be run cooler than the inner electrodes 30-I creating a "C" convection pattern. The glass would move along the top of the furnace, from the centre C to sidewalls 14 and thence downwardly towards bottom 16 and across inwardly to central outlet 15. The "C" pattern provides for a shorter residence time. However, in a lined furnace this may be compensated for by running the furnace at a higher temperature such that high quality glass may be produced.

The power applied to the outer electrodes 30-0 and minimum spacing thereof from sidewalls 14 is important for controlling the velocity and direction of the convective roll CV. Hot glass 12 tends to remain high in the furnace 10 and cool glass 12 tends to descend. The relative difference in glass temperature thus governs the rate at which glass 12 rises or descends in the furnace 10. If the outer electrodes 30-0 are overpowered or placed too close to the sidewalls 14, heat energy concentrated at the electrodes 30-0 will cause overheating and rapid corrosion of the sidewalls 14. Further, the flow of convective roll CV may be disrupted. Thus, the glass 12 may follow a path to outlet 15 which does not provide sufficient residence time to produce good quality glass. If the outer electrodes 30-0 are far removed from sidewalls 14 a fast downward flow may occur near said sidewalls causing reduced residence time and increased furnace wear. Properly placed outer electrodes 30-0 control the speed of the convective roll CV without overheating the sidewalls 14.

- 9 -

0078715

The furnace 10 has two major vertical zones. Initial melting of batch 20 takes place in the upper portion of the furnace 10, hereinbefore referred to as the active zone A. Fining takes place in lower portion of the furnace referred to as the quiescent zone Q. The respective active and quiescent zones A and Q are shown schematically separated by the dotted line 21.

In figure 1, the sidewalls 14 are shown as extending above the upper surface 18 of the glass 12. However, for purposes of discussion herein, the furnace can be said to have a height, depth or vertical dimension H as shown extending across the respective active and quiescent zones A and Q. This dimension does not necessarily include a sump (not shown) present in some furnaces.

Although the furnace may be constructed in various shapes and sizes, for purposes of simplifying the discussion and analysis herein, the furnace 10 may be considered to be circular having radius R as lateral dimension measured from the centre to an interior surface 27 of sidewall 14. For near circular shapes the lateral dimension should be considered the shortest distance from the centre line to the sidewall (for example, assuming a regular polygon: the short perpendicular to a side.) In noncircular arrangements the longer dimension should control (for example one half the width of a rectangle or the focal length of an ellipse). In the discussion below, near circular shapes are emphasized because they are believed to be most efficient.

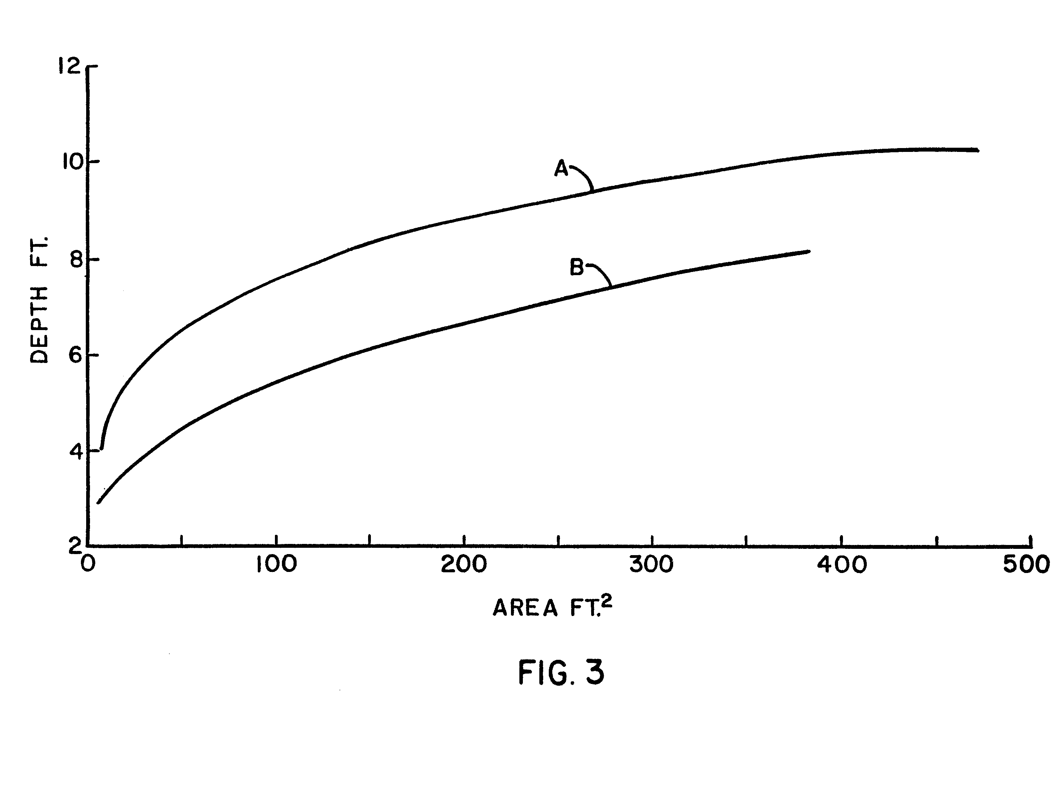

Figure 3 illustrates that a furnace 10 having batch electrodes may be significantly reduced in depth. Curve A shows the relation of depth versus surface area in a vertical refractory furnace with wall electrodes.  Curve B shows the relation for the same type of furnace with batch electrodes.  The curves are relatively close together for small furnaces (e.g. less than 25 ft$^2$,(i.e. 2.3m$^2$). However as the furnace size increases the curves follow similar but offset paths.  For example, in furnaces having a melting area of between about 100 and 300 ft$^2$ (9.3 and 28m$^2$) the furnace with batch electrodes may be about 2 ft. (0.6m) lower in depth. This is a significant reduction in depth which results in lower construction cost.  The operating cost of such a furnace is also reduced due to lower heat loss for the smaller sidewall surface area.  Notice that except for relatively small furnaces the depth should exceed at least 4 ft (1.2m) overall.  In the range 100 to 300 ft$^2$ (9.3 to 28m$^2$) plus, the depth of a furnace without batch electrodes increases to about 10 ft (3m), including a 3 ft (0.9m) quiescent zone Q. In the same range a furnace with batch electrodes has a depth of about 8 ft (2.4m) and a similar quiescent zone.  The same quiescent zone is needed to refine the glass but a shallower active zone is needed for melting because of the improved efficiency of batch electrodes.

In a typical furnace made and operated in accordance with the present invention, an aspect ratio thereof may be defined as the vertical dimension H divided by the lateral dimension equal to the diameter D or twice the radius R.  In a small furnace where D is about 5 feet (1.5m) or less the aspect ratio should not be less than 1.0.  As the diameter D increases, the aspect ratio should follow curve B in Figure 3 to about 0.3.  It should be understood however, that the shallowest furnace is desired for the particular lateral dimension chosen.  Further, the dimensions should be chosen to minimize energy losses as much as possible.

In Figure 2 there is shown a top plan view schematically illustrating a typical electrode layout for the furnace 10 of Figure 1. In a furnace of the type herein described, two sets of electrodes are set out. A first set or group of six main electrodes 30M are located along radial lines at 60° intervals or positions (1M-6M) about the centre C of the furnace 10. The main electrodes or mains 30M may be located at some radial position RM from the centre C of furnace 10. The mains 30M (shown as dark circles) may be electrically energized by a source of power (not shown) in a cross fired arrangement producing phasors PM. A second set of six pairs of respective inner and outer staggered electrodes 30S-I, 30S-O shown as open circles, are interspersed at six locations 1S-6S circumferentially half-way between the main electrodes 30M. Similarly, the respective inner and outer staggered electrodes 30S-I and 30S-O may be located at respective radial positions RS-I and RS-O. Staggered electrodes 30S-O and 30S-I when energized produce a pair of phasors PS adjacent and in the same sense as each main phasor PM. Other possible arrangements also include aligning inner electrode 30S-I in line with mains 30M and cross fired. Also inner electrode 30S-I could be placed intermediate mains 30M and outer electrode 30S-O and independently fired.

In Figures 1 and 2, assuming a substantially circular furnace 10 of radius R and depth H, the following are examples of electrode positions for various nominally sized furnaces:

Example I

Furnace Radius R = 10ft (3m) Furnace Depth H = 7.5ft (2.3m) No. Electrodes = 15-18

six (6) mains 3OM

six (6) outer staggered 3OS-O

three (3) to six (6) inner staggered 3OS-I

| Location | Radius | Angle between Electrodes | Position |
|---|---|---|---|
| 3OM | RM = 9ft (2.7m) | 60° | 1M-6M |
| 3OS-O | RSO = 9ft (2.7m) | 60° | 1S-6S (offset from mains by 30°) |
| 3OS-I | RSI = 3-5ft (0.9 to 1.5m) | 120-60° | on line with outer staggered electrodes |

Spacing S from sidewall 14 = minimum 1 ft (0.3m) all electrodes

Example II

Furnace Radius R = 5ft (1.5m) Furnace Depth H = 5ft (1.5m) No. Electrodes = 9

six (6) mains 3OM
three (3) staggered (inner)

| Location | Radius | Angle between Electrodes | Position |
|---|---|---|---|
| 3OM | RM = 4ft (1.2m) | 60° | 1M-6M |
| 3OS-I | RM = 1.5-2ft (0.45-0.6m) | 120° | 2S, 4S, 6S |

Spacing S from sidewall 14 = minimum 1ft (0.3m) all electrodes

Examples III

Furnace Radius R = 2.5ft (0.75m) Furnace Depth H = 3ft (0.9m) No. Electrodes = 3, 4 or 6 Position - RM = RS = 1.5-2.0ft (0.45-0.6m) Angle - 120, 90, or 60°

Spacing S from sidewall 14 = minimum lft (0.3m)
all electrodes

In the present invention batch electrodes 30
(subscripts sometimes hereinafter omitted) may be set
up as in Example I spaced from sidewalls 14 and placed
along radial lines at 30° intervals.  The radial
position of each batch electrode 30 is a significant
variable.  Notice that batch electrodes 30 may be
placed near the centre C or near the sidewall 14 and
that there may be more than one batch electrode 30 on
any radial line.  Further it is possible to provide
symmetrical placement locations, such that, no two
electrodes lie on the same radial line.  By placing
electrodes 30 in these positions, electrical symmetry
of current flow is maintained.

Inner staggered electrodes 30S-I placed near the
centre C of the furnace 10 (e.g., at RS-I = R/2 or less),
have two advantages.  First, by providing power in the
centre C of the furnace 10, the melting rate in the
centre can be increased.  In conventional furnaces the
centre ordinarily has the lowest melting rate since it
is furthest from wall electrodes.  By placing electrodes
30-I near the centre, either the output of the furnace
10 can be increased or the wall temperature can be
reduced.

A second advantage of placing inner staggered
electrodes 30S-I near the centre C of the furnace 10
is that the furnace 10 need not be as deep.  Power
concentrates near the underside 20' of the batch
blanket 20 in the active zone A where melting is desired
(see Figure 1).  Concentrating power near the batch
blanket 20 tends to produce a relatively stable
quiescent zone Q in about the lower 1/3 to 1/2 of the
furnace 10.  Ideally, the glass 12 in the quiescent
zone Q tends to move slowly towards outlet 15 thereby providing sufficient residence time for the glass 12 to fine.

The placement of main electrodes 30M and outer staggered electrodes 30S-0 near, but spaced from, the sidewall 14 of the furnace 10 has significant advantages in addition to those set forth above. The number of electrodes can be greatly reduced since there is better utilization of electrodes surface area. That is, significant current flows from lateral surfaces 30 of electrodes 30 rather than from tip 31. For example, in a conventional furnace having a radius of 10ft (3m) forty-eight electrodes are used. With the present invention, electrode usage could be reduced to between twelve and eighteen electrodes.

In a large furnace having a diameter greater than about 5ft (1.5m) batch electrodes 30 are placed around the periphery of the furnace 10 spaced from sidewall 14 by about 1 to 2ft (0.3 to 0.6m) as well as near the cenre C thereof. By eliminating conventional wall electrodes and spacing electrodes 30M and 30S-0 1 to 2ft (0.3 to 0.6m) from the wall, the temperature of the sidewall 14 and hence corrosion of the refractory, can be greatly reduced. In a small furnace 10, electrodes 30 should be placed closer than 1ft (0.3m) to the sidewall in order to produce the desired "S" convection. If a "C" pattern is desired, the electrodes 30 could be placed at about R/2.

The invention operates as follows: At least one group of electrodes 30 is arranged in a pattern, one each in a selected position of the pattern relative to the geometric centre C of the furnace 10. The pattern is symmetrical in radial and circumferential directions relative to the centre C. Except for small furnaces placement of the electrodes 30 near the sidewalls is restricted to not closer than about 1ft (0.3m). Each

- 15 -

0078715

electrode 30 or groups of electrodes may be carried separately be a dedicated support arm or other suitable device (not shown). Likewise, different ones of the various groups of electrodes 30 may be carried on a common support (also not shown). Thereafter, the electrodes 30 are then lowered into the furnace 10 through the batch blanket 20 and energized. Energization of the electrodes should be symmetrical with each electrode in a group dissipating substantially the same energy as other ones in the group. The preferred embodiment seeks to produce uniform melting across the furnace with relatively high heat near but spaced from sidewalls 14 and somewhat lesser heat concentrated at the centre C. Of course, other arrangements of electrical firing are possible and such should be tailored to the idiosyncracies of the furnace 10 to provide a heat distribution, which, while not totally uniform, produces good quality glass.

The electrodes 30 may be operated with their tips 31 at a selected operating depth DP below the upper surface 18 of glass 12. Further, the depth of one group of electrodes, e.g. the mains 30M in Figure 2, may be different than the depth of the staggered electrodes 30S-I and 30S-O. Also, adjustments may be made to vary the depth of individual electrodes if desired. However, for purposes of illustration herein, the operating depth DP of all the electrodes 30 is assumed to be the same and substantially constant once determined.

Figure 3 shows curves for relatively clear glasses. Such glasses tend to require a relatively thick active zone A because energy radiates toward the bottom 16 preventing the thermal stratification that produces a clearly defined quiescent zone Q. The temperature difference between the upper surface 18 of the glass 12 and the furnace bottom 16 may be as small as 25°C. The furnace must be deep enough to produce relatively distinct active and quiescent zones. Other so-called dark glasses tend to suppress radiation. The active and quiescent zones are probably more distinct and both may be somewhat narrower than in a furnace melting clear glass. The drawing of Figure 3 represents the case where active and passive zones are broadest. It should be apparent that, except for small furnaces, the overall height of furnaces operated in accordance with the present invention may be reduced by about 2ft (0.6m).

For the clear glasses the tip 31 of the electrodes 30 should be placed as close to an underside 20' of the batch 20 without exceeding current density limits or creating hot spots in the blanket. The operating depth DP of each electrode 30 may be changed by means set forth in the above noted patent application and are not detailed herein. It can be readily appreciated that since adjustments to the operating depth DP are easily accomplished, adjustment of the operating characteristics of the furnace is facilitated. More efficient melting can be achieved because the location of the tip end 31 of each electrode 30 can be adjusted to best suit melting characteristics of the particular glass being melted.

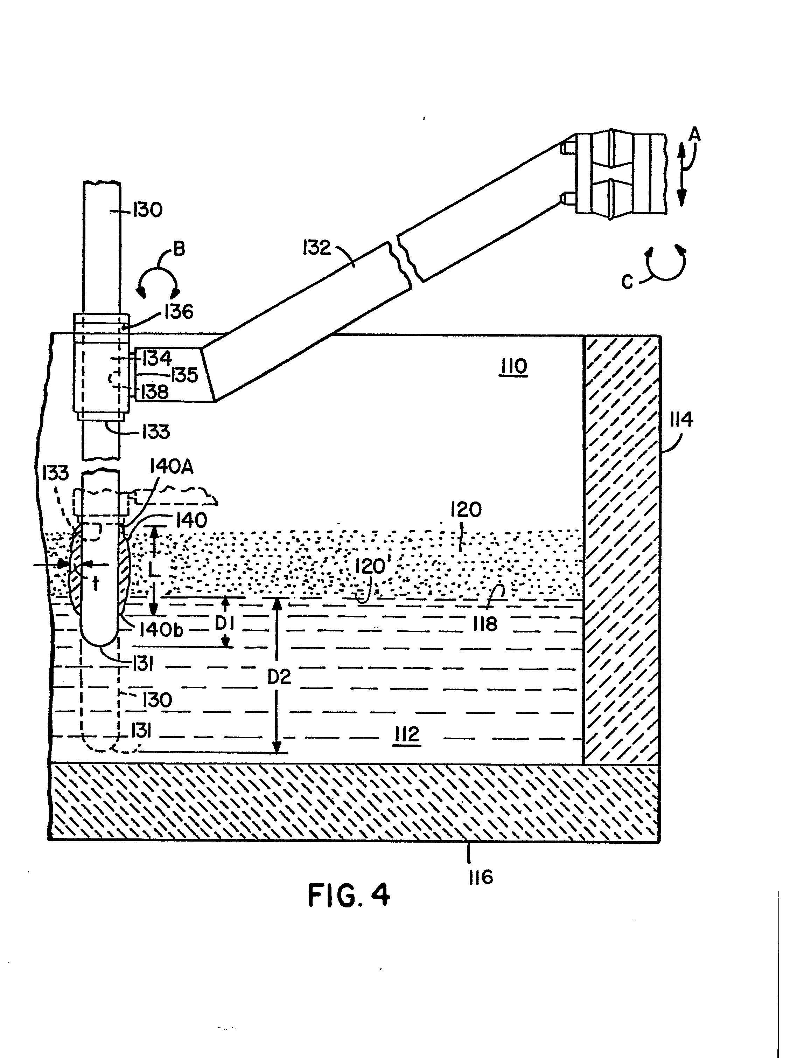

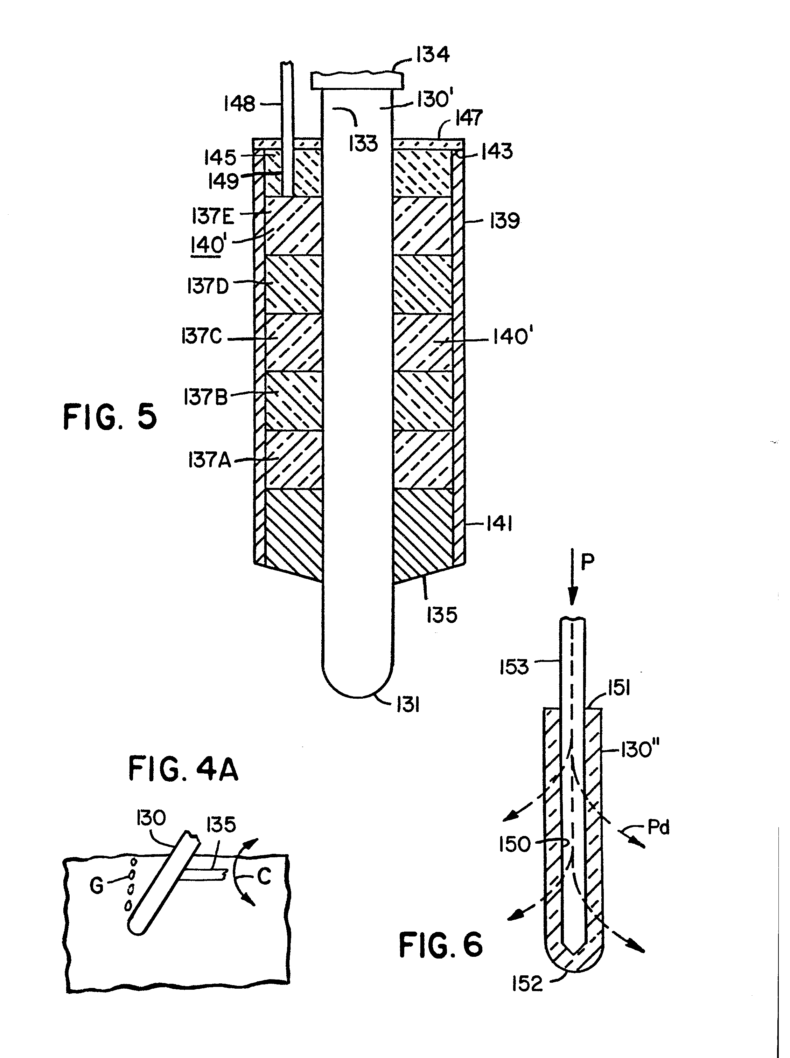

Figure 4 illustrates another embodiment to the present invention wherein a vertical electric glass-melting furnace 110 is illustrated in fragmented side section. The furnace 110 contains a bath of molten thermoplastic material such as glass 112. The furnace 110 includes an upstanding side wall 114 and a bottom wall 116. The bath of molten glass 112 has an upper free surface 118 upon which there is deposited a quantity of glass-forming batch materials or batch 120.

The batch 120 is in the form of a floating blanket which insulates the free surface 118 of the batch 112 and retains heat within the furnace 110. The molten glass 112 is initially melted by conventional means including a gas burner not shown. Thereafter, continuous melting takes place by means of a plurality of current-carrying electrodes 130 inserted into the bath 112. Only one electrode 130 is shown in order to simplify the drawing.

Each electrode 130 may be carried in a collar 134 secured to a support arm structure 132. The collar 134 has an adjustment ring structure 136 for allowing the electrode 130 to slide up and down within an aperture 138 in said collar 134. The support arm 132 is shown fragmented and is suitably supported exterior of the furnace 110 by a frame structure (not shown) which allows the support arm 132 to move upwardly and downwardly in the direction of the double headed arrow A in Figure 4. Support arm 132 may be joined to collar 134 by sleeve 135 which allows individual placement of electrode 130 (see curved double headed arrow B). Also, support arm may be moved circumferentially about its frame structure by means not shown (in the direction into and out of the page as illustrated by double headed arrow C.)

Although other aspects and embodiments are described herein, this aspect of the present invention is primarily concerned with protecting the electrode from its tip 131 to a point therealong at 133 just below the collar 134. The electrode 130 is normally immersed so that its tip end 131 extends into the bath 112 to a depth D1, referred to as the operating level, as measured from the free surface 118. In the phantom drawing, superimposed on the solid line drawing in Figure 4, electrode 130 is shown with its tip 131 immersed to a second or dipping level D2 as measured from the free surface 118 of the bath of glass 112.

This embodiment of the invention operates as follows: A portion of the electrode 130 from the tip 131 to near the point 133 is submerged or dipped into the bath 112. The electrode is held submerged with its tip 131 at the depth D2 for several minutes until it becomes heated sufficiently, such that, the glass 123 becomes adhered to the electrode 130 at least along a portion thereof submerged below the free surface 118 (i.e. from tip 131 to near point 133). After sufficient time has elapsed for the molten glass 112 to adhere to the electrode 130, it is partially withdrawn from the furnace 110 up to the operating level D1. Adhered glass shown at reference numeral 140 forms a coating 140 having respective upper and lower edges 40A-40B. The coating 140 covers or coats a selected length L of the electrode 130 as a relatively thin film of thickness t thereby blocking oxygen infiltration and protecting the electrode from deleterious oxidation. The thickness t of the coating 140 is dependent upon the temperature and viscosity characteristics of the glass 112. The adhered glass coating 140 becomes partially solidified or highly viscous due to the fact that the temperature of the electrode 130 drops to near a solidification temperature thereof as one moves away from the tip 131. Also, the batch 120 surrounding the electrode 130 is relatively cool and insulates the coating 140 from the high heat of furnace 110.

The depth at which the electrode 130 is operated may vary about the depth of D1, but for purposes of illustration herein, the operating level D1 of the electrode 130 remains substantially constant once it is determined. External cooling of the electrode 130 is not generally necessary since portions thereof above upper edge 140A which are exposed to ambient oxygen are cooled by natural convection to below the oxidation temperature of the moly. Portions of the electrode 130 below a lower edge 140B of the coating 140 are protected from oxidation by immersion in the molten glass 112.

This aspect of the present invention has most significant applications for batch electrodes or electrodes which penetrate a batch blanket in cold crown vertical melters. In principle, however, there is no reason why such an electrode could not be used wherever electrodes are presently used in furnaces (e.g. through the side walls 114 or bottom wall 116) as long as some form of protection is provided to prevent furnace leaks.

This aspect of the present invention affords considerable savings over conventional protective devices. Further, since conventional devices are typically water cooled, there are significant energy savings available resulting in higher melting efficiencies.

For certain glasses the tip 131 of the electrode 130 should be placed as close as possible to an underside 120' of the batch 120 near free surface 118. For other glasses more efficient melting takes place when the tip 131 of the electrode 130 is placed further down in the molten glass 112. It can be readily appreciated that these adjustments are more easily accomplished by using a bare rod concept herein described. Since the electrode structure formed of a cylindrical moly rod is significantly lighter without the stainless steel water-cooled jacket of the prior conventional furnaces, adjustment of operating level D1 of the electrode 130 is uncomplicated. Thus, more efficient melting can be achieved because the location of the tip end 131 of the electrode 130 can be fine tuned to best suit melting characteristics of the particular glass being melted. The operating level Dl of the electrode 130 may be changed by simply moving the support arm 132 upwardly and/or downwardly from exterior the furnace 110 or by moving the electrode in support collar 134. Further, the electrode 130 may be reciprocated between levels Dl and D2 to periodically replenish the coating 140.

The outer surface of the electrode 130 may be treated prior to immersion in the bath 112 in order to protect the moly and to allow for more adequate adhesion of the glass layer 140 to the electrode 130. A refractory substance such as a flame sprayed aluminium oxide sold under the trademark ROKIDE appears to reduce oxygen contamination and has a beneficial effect on adhesion of the glass layer 140 to the electrode 130. A coating of chromium oxide over the surface of electrode 130 may also enhance adhesion of the glass coating 140. It has been found that slight oxidation of the electrode 130 itself may be helpful to glass adhesion. A coating of molybdenum disilicide may also be used to protect the electrode 130 from oxidation.

Sometimes gases are evolved during the glass melting process (see Figure 4A). If such gases come into contact with the electrode 130, oxidation or corrosion thereof may occur. As a further precaution against oxidation, therefore, the electrode 130 may be inclined about the vertical by means of sleeve connection 135 (see double headed arrow B). Gas bubbles evolved will tend to float vertically upward and away from electrode 130.

In Figure 5 there is illustrated an alternative embodiment of this aspect of the present invention wherein electrode 130' is pre-shielded with a protective glass coating 140'. The electrode 130' has a moly collar 135 located near the tip end 131. The collar 135 may be threaded, shrink fitted or bolted onto the electrode 130'. A plurality of different glass-forming materials, in the form of unconsolidated cullet or solid glass annular rings or annular cylinders 137A-137E, may be located axially of the electrode 130' along a selected length L' to grade the protective coating 140' thereof. If glass cullet is utilized for the rings 137A-137E, an alumina tube 139 of sufficient length may be joined at a lower end 141 to the collar 135 for containing the materials therein. A fused silica material such as sold under the trademark VYCOR could be used for tube 139. At an upper end 143 of the tube 139, an annular refractory cap or plug 145 may be sleeved over the rod 130' and located within the tube 139 to close a space containing the protective coating 140' therein. The plug 145 may be a packing material such as FIBERFRAX® Rope. Additionally, a readily available extrudable silicone sealant 147 such as Dow Corning RTV 732 could be placed over refractory cap 145. A purge line 148 may be fitted through opening 149 in plug 145 and seal 147 for the introduction of a purge gas P interior the tube 139. A purge gas P protects the moly electrode during startup before the cullet rings 137A-137E melt. Thereafter, the melted material protects electrode from oxygen contamination.

The electrode 130' illustrated in Figure 5 might be suitably clamped to the support collar 134 and slowly lowered through the batch 120 and into the molten glass 112. At such time, the various layers of protective materials 137A-137E would become melted or softened and adhere to the electrode 130'. It should be realized that, as in the embodiment of Figure 4, the protective layer 140 experiences a temperature gradient when placed in service. The temperature of the electrode 130' decreases as one moves axially therealong from the tip 131 to the point 133 near where it is supported by collar 134. Different glass compositions may be used for the rings 137A-137E forming protective layer 140', each having a different softening and annealing point. Each will be susceptible to some viscous flow at various temperatures. By tailoring the compositions of rings 137A-137E from relatively hard glasses, for the lowest protective layer 137A near the tip 131, to relatively soft glasses at the upper end of the protective layer 133, each will exhibit the proper characteristics at its anticipated operating temperature. By grading the glasses as hereinabove set forth, there is less likelihood of thermally shocking the protective layer 140' over the temperature gradient therealong. Further, because the batch layer 120 acts as an insulator from the high heat generated within the bath of molten glass 112, the protective coating 140' will remain relatively intact even though it is softened.

The following Example is thought to set forth a suitable embodiment of a graded protective coating 140' beginning with the lower ring 137A or relatively softer glass and progressing to the uppermost ring 137E of relatively harder glass as follows:

137A - Borosilicate (Corning Code 7740) (8" long, 200mm)

137B - Alkali Barium Borosilicate (Corning Code 7052) (7" long, 178mm)

137C - Borosilicate having a high boric oxide content as set forth in U.S. Patent 2,106,744 137D-137E - Borosilicate glass as in 137C mixed with increasing amounts of anhydrous boric oxide from 20 to 40% respectively (7" long each, 178mm)

Rings 137A-137E - 100 mesh cullet

Tube 139 - VYCOR brand tubing

Total length of coating - approximately 36"
(915mm)

The present invention also contemplates the use of a borosilicate glass tube 139 such as Corning Code 7052 having an expansion comparable with the moly. The tube 139 would be sealed directly to the electrode 130' without the cullet fill 137A-137E. The electrode 130' should be preheated in order to prevent thermal shock.

An advantage of the arrangement illustrated in Figure 5 is that electrode 130' may be prefabricated for quick insertion into the furnace 110 without any other preparation. The tube 139 not only contains therewithin the protective layer 140' (if in granular form), but also provides for some protection of the protective layer 140' at least until it is consolidated during operation of the furnace 110. The moly collar 135 would normally be located below the level of the free surface 118 of the bath 112 shown in Figure 4, and thus, is protected from oxidation by its immersion in the molten glass 112.

In Figure 6 there is illustrated yet another embodiment of the present invention. An electrode 130" may have an axial bore 150 drilled or formed therein. The bore 150 extends generally lengthwise thereof from an open upper end 151 to near tip 152 thereof. A purge line 153 may be located in the open end 151 and a purge fluid P introduced therein. At elevated temperatures, hydrogen or other gases inert with respect to moly will diffuse therethrough as shown by dotted arrow Pd. This embodiment, when dipped, as shown in Figure 1 or otherwise protected from oxidation as elsewhere set forth herein, is additionally protected

0078715

from oxidation without undue energy and materials costs.

CLAIMS:

1.    A method of operating a glass-melting furnace
having sidewalls and a bottom wall with a central
opening therein forming a vessel for containing a
bath of molten glass, and at least one group of
electrodes for electrically firing the bath from a
source of electrical energy, the method comprising the
steps of:    selecting individual placement locations
for each electrode of each group, said individual
placement locations being radially and circumferentially
symmetrical relative to a geometric centre of the
furnace;   limiting said selected placement locations
away from the sidewalls of the furnace by a minimum
spacing;   placing one each of the electrodes of each
group at the individual placement locations selected;
immersing each of the electrodes into the molten
glass at each respective location to a selected
immersion level;   electrically firing each group of
electrodes in a symmetrical electrical pattern relative
to each electrode in the group and each other group of
electrodes such that energy dissipated is concentrated
away from the sidewalls of the furnace;   and selecting
a furnace having respective vertical and lateral
dimensions such that melting and refining occurs in
relatively narrow respective active and quiescent
zones respectively below each other and an upper
surface of the bath.

2.    A method as claimed in claim 1, further
comprising the step of depositing a batch blanket of
fusible glass-forming batch materials on top of the
bath of molten glass and piercing said batch blanket
with said electrodes.

3.    A method as claimed in claim 2, further comprising
the steps of electrically firing the electrodes for
conducting electrical currents through the bath of molten glass and concentrating energy dissipated adjacent to the batch blanket.

4.   A method as claimed in claim 2 or 3, further comprising the step of establishing a convective flow in the bath of molten glass.

5.   A method as claimed in claim 4, wherein the rate of convective flow is selected by selecting the minimum spacing of electrodes near the sidewalls,and selecting a rate of electrical energy dissipation in the bath of glass for controlling the convective roll to that selected.

6.   A method as claimed in claim 4, further comprising the step of selecting a minimum residence time for glass within the furnace, including maintaining the glass in motion in the general direction of the convective roll pattern and thereby maintaining the glass in the furnace for the selected minimum residence time.

7.   A method as claimed in claim 4, wherein the convective roll pattern comprises an "S" pattern flowing radially inwardly in the active zone under the batch blanket, downwardly along the centre and radially outwardly immediately above the quiescent zone and downwardly along the sidewalls and radially inwardly in the quiescent zone towards a central outlet of the furnace.

8.   A method as set forth in claim 4, wherein the convective roll pattern comprises a "C" pattern flowing radially outwardly in the active zone and downwardly along the sidewalls and radially inwardly in the quiescent zone towards a central outlet of the furnace.

9.   A method as claimed in any preceding claim, further including the steps of selecting a maximum aspect ratio of a vertical dimension of the furnace measured vertically across the active and quiescent zones and a lateral dimension measuring across the centre from one sidewall to another such that this aspect ratio of the respective vertical to lateral dimensions does not exceed 1.0.

10. A method as claimed in claim 9, wherein the aspect ratio is between about 1.0 and about 0.4.

11. A method as claimed in any preceding claim, further comprising the steps of: maintaining each electrode at the immersion level along a selected length thereof susceptible to temperatures in excess of the oxidation temperature for a sufficient time to allow the molten glass to adhere to and coat the electrode over said selected length; and withdrawing each electrode and the adhered molten glass coating same from the bath at least to a selected operating level above the immersion level such that each electrode is shielded from oxidizing agents along the selected length.

12. A method as claimed in claim 11, further including the step of precoating each electrode with a relatively thin protective refractory coating prior to immersion into the bath.

13. A method as claimed in claim 1, further comprising the step of surface coating the electrodes with a relatively thin coating of refractory selected from the group consisting of aluminium oxide, chromium oxide, molybdenum disilicide, and molybdenum oxide.

14. A method as claimed in claim 1, further including the step of precoating each electrode with a relatively thin protecting coating of vitreous material prior to immersion into the bath.

15. A method of protecting or shielding a device from oxygen within a glass-melting furnace containing a supply of molten glass, the device being maintained at elevated temperatures above an oxidizing temperature thereof comprising the steps of: dipping the device into the molten glass to a selected immersion level along a selected length thereof susceptible to temperatures in excess of the oxidation temperature, maintaining the device at the immersion level for a sufficient time to allow the molten glass to adhere to and coat the device over said selected length, and withdrawing the device and the adhered molten glass coating same from the bath at least to a selected operating level above the immersion level such that the device is shielded from oxidizing agents along the selected length.

16. A method as claimed in claim 15, wherein the device comprises at least one of an electrode, a thermocouple, an oxygen sensor and a stirrer.

17. A method as claimed in claim 15 or 16, further comprising the step of electrically energizing the electrode for conducting electrical currents through the bath of molten glass.

18. A method as claimed in claim 17, wherein evolved gases occur adjacent the energized electrode, and further including the step of inclining the electrode relative to a vertical direction in order to minimize contact of the evolved gas and the electrode.

19. A method as claimed in any one of claims 15 to 18, further comprising the step of precoating the device with an annular glass coating at least along the selected length.

20. A method as claimed in claim 19, wherein the annular glass coating is of at least one vitreous material which surrounds the device along the selected length.

21.   A method as claimed in claim 20, wherein the
annular glass coating comprises a plurality of
vitreous materials having different viscosity
characteristics, from a relatively hard glass to a
relatively soft glass, said materials being located
about the device in axially located annular bands
from the respective relatively hard to soft glasses,
beginning near a portion of the device exposed to
relatively higher temperatures for avoiding thermal
shock and spalling of the vitreous materials away from
the device.

22.   A method as claimed in claim 20, wherein the
vitreous material is initially in granular form
and the method further comprises the step of containing the granular vitreous material in position
about the device until said vitreous material becomes
softened and viscously adhered to the device.

23.   A method as claimed in claim 22, further
comprising the step of sealing the contained granular
material against ambient atmosphere.

24.   A method as claimed in claim 22, further
comprising the step of introducing a purge gas through
the granular material adjacent the exterior of the
device.

25.   A method as claimed in claim 15, further
comprising the step of diffusing a purge gas through
the device from the interior to the exterior thereof.

26.   A glass melting furnace comprising:  upstanding
sidewalls and a bottom wall forming an open top vessel
for containing a bath of molten glass having an upper
surface, and vertical and lateral dimensions of the
vessel being in such proportions that melting and
refining occurs in respective upper and lower bands
below the upper surface such that the upper band is about the same thickness as the lower band, at
least one group of electrodes entering the furnace
through the open top and coming into contact with
the molten glass through the upper free surface
thereof, said electrodes being placed at selected
locations circumferentially and radially symmetrical
relative to a geometric centre of the vessel and
spaced from the sidewall thereof by a selected
minimum distance.

27.    A furnace as claimed in claim 26, wherein the
vertical and lateral dimensions are in an aspect
ratio of from about 1 to about 0.4.

28.    A furnace as claimed in claim 26 or 27 wherein
the selected minimum spacing of electrodes from the
sidewall of the furnace is between from one to two
feet (about 0.3 to 0.6 m).

29.    A furnace as claimed in any one of claims 26
to 28, wherein each electrode in each group of
electrodes is located at a corresponding radial
distance from the centre of the furnace, and said
electrodes in each group are spaced at uniform circumferential locations about said centre.

30.    A furnace as claimed in any one of claims 26 to
29, comprising one group of three electrodes wherein
the radial distance is approximately 50%-80% the distance
from the centre to the sidewall.

31.    A furnace as claimed in any one of claims 26 to
29, comprising two groups of six electrodes, the
radial distance being approximately 70-90% the
distance from the centre to the sidewall.

32.    A furnace as claimed in any one of claims 26 to
29, comprising two groups of six electrodes, the
radial distance being approximately 70-90% the distance from the centre to the sidewall and each electrode in one group is offset approximately 30° from adjacent electrodes in the other group and 60° from adjacent electrodes in the same group.

33.    A furnace as claimed in claim 31, further comprising a third group of at least three electrodes each being located at a radial distance approximately 30%-50% the distance from the centre to sidewall of the furnace and spaced 120° apart.

34.    A furnace as claimed in claim 33, wherein the third group of electrodes comprises at least six electrodes spaced 60° apart.

35.    A furnace as claimed in claim 26, wherein the vertical and lateral dimensions of the vessel are respectively taken across the active and quiescent zones and from the centre to an interior surface of the sidewall, and said vertical and lateral dimensions are in an aspect ratio of not more than about 1.0 for a relatively small furnace, having a diameter of about less than 5 ft (1.5 m), to about 0.4 for a relatively large furnace, and wherein the vertical dimension is a minimum of about 4 ft (1.2 m) and the lateral dimension ranges from about 5 ft (1.5 m) for a relatively small furnace and about 22 ft (6.7 m) for a relatively large furnace.

36.    A furnace as claimed in claim 35, wherein the vertical dimension is reduced by about one ft  (0.3 m) for a relatively small furnace and about 2 ft (0.6 m) for a relatively large furnace.

37.    A furnace as claimed in any one of claims 26 to 36, said electrodes further comprising:  an oxidizable electically conductive rod of a selected length having a tip end and extending axially therefrom to at least a support portion thereof, said rod being oxidizable in the presence of oxygen and at temperatures necessary to melt the glass, said rod being locatable in said furnace and partially submersible in the molten glass from the tip end to at least near the support portion thereof, and a relatively thin coating of vitreous material adhered to a selected portion of the rod between the tip end and the support portion, said vitreous coating being relatively highly viscous at temperatures at least near said oxidation temperature of said rod and remaining adhered to said rod, and said rod being shielded from oxygen by said coating where the temperature of said rod is in excess of an oxidation temperature thereof.

38. A furnace as claimed in claim 37, wherein the coating for each electrode comprises a semi-solidified mass of the supply of glass forming a viscous film about the electrode from at least the upper free surface of the glass to at least a portion of the electrode which has a temperature below the oxidation temperature of the electrode.

39. A furnace as claimed in claim 37, wherein the vitreous coating is formed of the molten glass contained within the furnace.

40. A furnace as claimed in any one of claims 26 to 39, wherein each group of electrodes is electrically energized symmetrically relative to the other groups of electrodes.

41. A device for immersion into a supply of glass in a molten state, said device being capable of operating in excess of an oxidation temperature thereof, comprising: an oxidizable rod of a selected length having a tip end and extending axially therefrom to
at least a support portion thereof, said rod being
oxidizable in the presence of oxygen and at
temperatures necessary to melt the glass, said rod
being locatable in said furnace and partially submersible in the molten glass from the tip end to
at least near the support portion thereof, and a
relatively thin coating of vitreous material adhered
to a selected portion of the rod between the tip
end and the support portion, said vitreous coating
being relatively highly viscous at temperatures at
least near said oxidation temperature of said rod
and remaining adhered to said rod, and said rod being
shielded from oxygen by said coating where the temperature of said rod is in excess of the oxidation
temperature thereof.

42.    A device as claimed in claim 41, wherein the
coating comprises a semi-solidifed mass of the supply
of glass forming a viscous film about the electrode
from at least the upper free surface of the glass to
at least a portion of the electrode which has a
temperature below the oxidation temperature of the
device.

43.    A device as claimed in claim 41, wherein the
coating comprises a plurality of annular formations
of vitreous materials surrounding the device continuously along the selected length, said vitreous
materials being formed of substances having viscosity
characteristics successively ranging from a relatively
high viscosity near the electrode tip to a relatively
lower viscosity remote from said tip.

44.    A device as claimed in claim 43, further
comprising a lower support means secured to the device
near the tip said support means engaging the high viscosity annular formation for supporting the coating against viscous flow thereof in the direction of the tip.

45. A device as claimed in claim 44, further comprising an annular containment tube surrounding the device coating along the selected length thereof said tube being secured at one end to the support means for preventing flow of the coating away from the device.

46. A device as claimed in claim 45, wherein the annular tube is formed of fused silica or alumina.

47. A device as claimed in any one of claims 41 to 46, further comprising means for introducing a purge gas into the same for shielding the device from deleterious ambiance.

FIG. I

FIG. 2

FIG. 3

2/4

0078715

FIG. 4

FIG. 5

FIG. 4A

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-3 983 309   (JOHNS-MANVILLE) <br> * Whole document * | 1,26 | C 03 B    5/027 <br> C 03 B    5/16 <br> C 03 B    5/18 |
| A | US-A-2 263 549   (PEYCHES) <br><br> * Whole document * | 1,26, 47 | |
| A | GB-A-  960 032 <br> (SIEMENS-SCHUCKERTWERKE) <br><br> * Whole document * | 1,21, 22,26, 43 | |
| A | DE-C-  889 337   (RAGNAR TANBERG) <br><br> * Whole document * | 1,24, 26,47 | |
| A | GB-A-  568 469   (THE GENERAL ELECTRIC COMPANY) <br> * Whole document * | 1,26 | TECHNICAL FIELDS SEARCHED (Int. Cl. 3) <br><br><br> C 03 B    5/00 |

The present search report has been drawn up for all claims

| Place of search <br> THE HAGUE | Date of completion of the search <br> 28-01-1983 | Examiner <br> VAN DEN BOSSCHE W.L. |
|---|---|---|